(19) Europäisches Patentamt
European Patent Office
Office européen des brevets

(11) **EP 2 388 978 B1**

(12) **EUROPEAN PATENT SPECIFICATION**

(45) Date of publication and mention
of the grant of the patent:
**12.12.2018 Bulletin 2018/50**

(51) Int Cl.:
*H04L 29/08* (2006.01)     *H04L 12/24* (2006.01)
*H04N 7/173* (2011.01)     *H04L 29/06* (2006.01)
*H04L 12/70* (2013.01)     *H04N 5/00* (2011.01)

(21) Application number: **10305528.1**

(22) Date of filing: **18.05.2010**

(54) **Methods and devices for determining network link load**

Verfahren und Vorrichtungen zur Bestimmung der Netzwerkverbindungslast

Procédés et dispositifs pour déterminer la charge de liaisons dans un réseau

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**23.11.2011 Bulletin 2011/47**

(73) Proprietor: **Alcatel Lucent
91620 Nozay (FR)**

(72) Inventors:
• **De Schepper, Koen**
  **2650, Edegem (BE)**
• **De Vleeschauwer, Bart**
  **9200, Dendermonde (BE)**

(74) Representative: **Nokia EPO representatives
Nokia Technologies Oy
Karaportti 3
02610 Espoo (FI)**

(56) References cited:
**EP-A2- 2 148 490          WO-A2-02/084469
US-A1- 2005 120 131     US-A1- 2009 178 088**

• SONG H: "A METADATA-BASED
VIDEO-ON-DEMAND TRAFFIC CONTROL OVER
THE NETWORK SUPPORTING BANDWIDTH
RENEGOTIATIONS" IEICE TRANSACTIONS ON
COMMUNICATIONS, COMMUNICATIONS
SOCIETY, TOKYO, JP, vol. E87-B, no. 5, 1 May
2004 (2004-05-01), pages 1373-1381,
XP001217958 ISSN: 0916-8516
• DEJIAN YE ET AL: "A buffer-driven approach to
adaptively stream stored video over internet"
HIGH SPEED NETWORKS AND MULTIMEDIA
COMMUNICATIONS 5TH IEEE INTERNATION AL
CONFERENCE ON JUL. 3-5, 2002, PISCATAWAY,
NJ, USA,IEEE, 3 July 2002 (2002-07-03), pages
81-85, XP010603000 ISBN: 978-0-7803-7600-7
• REININGER D ET AL: "A DYNAMIC QUALITY OF
SERVICE FRAMEWORK FOR VIDEO IN
BROADBAND NETWORKS" IEEE NETWORK,
IEEE SERVICE CENTER, NEW YORK, NY, US
LNKD- DOI:10.1109/65.752642, vol. 12, no. 6, 1
November 1998 (1998-11-01), pages 22-34,
XP000873125 ISSN: 0890-8044

**Description**

Technical field of the invention

The present invention relates to the field of methods and devices for determining network link load.

Background of the invention

Unbound elastic data flows within data communication networks are greedy flows that consume all available bandwidth, if they are not limited by the size of the client side buffer. Unbound elastic flows will typically transfer the data as soon as possible, and will not take into account the actual timing constraints of the flow.

Today, real time delivery (RTP/UDP) or near real time delivery (such as HTTP adaptive streaming (HTTP/TCP) with relatively small client buffer) is used for guaranteed quality video and media delivery. One of the main reasons is that fair-share unbound elastic delivery is suboptimal when compared to real time or near real time delivery, as bandwidth is typically shared equally (fair-share) in contrast to what is actually needed. As video services become more personalized, interactive and supported by caches, delivery of data will become even much burstier in the future and real time delivery will waste even more bandwidth.

The presence of such unbound elastic flows is expected to increase in the future, and is a challenge for managing resources in data communication networks. As unbound elastic flows consume as much bandwidth as possible, a certain link within a data communication network may seem to be congested, while in reality the link is serving content which is not already needed at the respective client side.

US2005/0120131, considered closest prior art for the invention, discloses a method for connection acceptance control and rapid determination of optimal multi-media content delivery over networks.

There is a need for methods and devices for estimating traffic load on data communication network links that carry unbound elastic flows.

Summary of the invention

It is an object of the present invention to provide a method and devices which solve at least one of the above problems.

The invention is defined by the appended claims.

According to a first aspect of the present invention a method is disclosed for determining a future link load for a predetermined type of data transmissions on a link in a data communication network, comprising:

- receiving information relating to size and delivery time constraints of data to be transported, for data transmissions of the predetermined type;
- determining the future link load for the link for the predetermined type of data transmissions, based on at least the information.

According to embodiments of the first aspect of the present invention the data size information comprises start and end addresses of the data to be transported, and the delivery time constraints comprise deadline information for delivery of the first and last byte of the data to be transported.

According to embodiments of the present invention, the data size and delivery time constraints information is based on a requested bandwidth usage function (RBUF), indicating the requested bandwidth usage as a function of time for a respective transmission.

According to preferred embodiments the predetermined type of data transmissions are unbound elastic data transmissions. According to embodiments of the first aspect of the present invention receiving information comprises extracting the information from signalling messages associated with the data transmissions, the messages being transmitted from associated clients to respective data servers.

According to embodiments of the first aspect of the present invention the method comprises receiving update information and updating previously received information with the update information for at least one data transmission of the data transmissions, during the data transmission.

According to embodiments of the first aspect of the present invention the future load at a certain moment in time is determined by:

a. determining an estimated bandwidth usage function, indicating the bandwidth usage in function of time, required for delivering the data to be transported within the respective delivery time constraints, for each of the data transmissions;

b. calculating the future link load for the predetermined type of data transmissions on the link, based on values of the respective estimated bandwidth usage functions for the certain moment in time for each of the data transmissions.

According to embodiments of the first aspect of the present invention each estimated bandwidth usage function is such that predetermined data requested within predetermined time constraints is not delivered faster when requested by means of a plurality of, possibly parallel, data transmissions, when compared to being requested by a single data transmission.

According to a second aspect of the present invention a method is disclosed comprising:

a. determining a future link load according to any of the methods of the first aspect;
b. reserving a corresponding bandwidth of the total available bandwidth on the link for the predetermined type of data transmissions, wherein the corresponding bandwidth is based on the future link load of the predetermined type of data transmissions. The corresponding bandwidth can for instance be larger than the future link load.

According to a third aspect of the present invention a method is disclosed for determining data rate for data transmissions on a link in a data communication network, comprising:

a. determining a future link load according to methods of the first aspect;
b. setting the data rate of at least one data transmission on the link in order to optimise the link load based on the determined future link load.

According to a fourth aspect of the present invention a method is disclosed for controlling energy consumption in a network, comprising:

a. determining a future link load according to methods of the first aspect;
b. setting the data rate of at least one data transmission on the link in order to optimise energy consumption of the network over the link based on the determined future link load.

According to a fifth aspect of the present invention a method is disclosed for performing admission for data transmissions over a network, comprising:

a. determining a future link load according to any methods of the first aspect;
b. determining whether to allow or disallow a further data transmission to be introduced on the link based on the determined future link load and the available bandwidth on the link.

According to a sixth aspect of the present invention a method is disclosed for billing, comprising:

a. determining a future link load according to methods of the first aspect;
b. determine a data transmission cost for at least one further data transmission of the predetermined type based on the future link load and on a bandwidth usage function of the further data transmission, indicating the bandwidth usage in function of time, required for delivering the respective data to be transported within the respective delivery time constraints.

According to a seventh aspect of the present invention a method is disclosed for routing data in a data communication network, comprising:

a. determining a first future link load for a predetermined type of data transmissions on a first link in a data communication network according to methods of the first aspect;
b. determining a second future link load for the predetermined type of data transmissions on a second link in a data communication network according to methods of the first aspect;
c. determining an estimated bandwidth usage function for a further data transmission to be routed over the first or over the second link, indicating the bandwidth usage in function of time, required for delivering data within the respective delivery time constraints;
d. routing the further data transmission over the first link or over the second link, based on at least the first future link load, the second future link load and the estimated bandwidth usage function for the further data transmission.

According to an eighth aspect of the present invention a method is disclosed for sharing bandwidth for a number of data transmissions in a network, comprising:

a. determining a future link load for a predetermined type of data transmissions on a link in a data communication network, according to methods of the first aspect;
b. using the future link load for controlling the rate assignment of data transmissions on a shared medium.

According to a ninth aspect of the present invention a device is disclosed for determining future link load for a predetermined type of data transmissions on a link in a data communication network, comprising:

- a means for receiving information relating to size and delivery time constraints for data to be transported, for data transmissions of the predetermined type;
- a means for determining the future link load for the link for the predetermined type of data transmissions, based on at least the information.

According to embodiments of the ninth aspect of the present invention the means for receiving information is adapted for extracting the request information from signalling messages associated with the data transmissions, the messages being transmitted from associated clients to respective data servers.
According to embodiments of the ninth aspect of the present invention, the device is further adapted for receiving update information and updating the previous information with the update information for at least one data transmission of the data transmissions, during the data transmission.
According to embodiments of the ninth aspect of the present invention the device is adapted for determining a future load at a certain moment in time by:

a. determining an estimated bandwidth usage function, indicating the bandwidth usage in function of time, required for delivering the data to be transported within the respective delivery time constraints, for each of the data transmissions;
b. calculating the future link load for the predetermined type of data transmissions on the link, based on values of the respective estimated bandwidth usage functions for the certain moment in time, of all of the data transmissions.

According to a tenth aspect of the present invention a device for performing congestion estimation is disclosed, comprising:

a. a device for determining a future link load according to any of the embodiments of the ninth aspect;
b. a means for reserving a corresponding bandwidth of the total available bandwidth on the link for the predetermined type of data transmissions, wherein the corresponding bandwidth is based on the future link load of the predetermined type of data transmissions.

According to an eleventh aspect of the present invention a device is disclosed for determining a data rate for data transmissions on a link in a data communication network, comprising:

a. a device for determining a future link load according to any of the embodiments of the ninth aspect;
b. a means for setting the data rate of at least one data transmission on the link in order to optimise the link load based on the determined future link load.

According to a twelfth aspect of the present invention a device for controlling energy consumption in a network is disclosed, comprising:

a. a device for determining a future link load according to any of the embodiments of the ninth aspect;
b. a means for setting the data rate of at least one data transmission on the link in order to optimise energy consumption of the network over the link based on the determined future link load.

According to a thirteenth aspect of the present invention a device for performing admission control for data transmissions over a network is disclosed, comprising:

a. a device for determining a future link load according to any of the embodiments of the ninth aspect;
b. a means for determining whether to allow or disallow a further data transmission to be introduced on the link based on the determined future link load and the available bandwidth on the link.

According to a fourteenth aspect of the present invention a device for billing is disclosed, comprising:

a. a device for determining a future link load according to any of the embodiments of the ninth aspect;

b. a means for determining a data transmission cost for at least one further data transmission of the predetermined type based on the future link load and on a bandwidth usage function of the further data transmission, indicating the bandwidth usage in function of time, required for delivering the respective data to be transported within the respective delivery time constraints.

According to a fifteenth aspect of the present invention a device for routing data in a data communication network is disclosed, comprising:

a. a device for determining a first and a second future link load for a predetermined type of data transmissions on a first and second link respectively in a data communication network, according to any of the embodiments of the ninth aspect;

c. a means for determining a bandwidth usage function for a further data transmission to be routed over the first or over the second link, indicating the bandwidth usage in function of time, required for delivering data to be transported within the respective delivery time constraints; wherein the device is adapted for routing the further data transmission over the first link or over the second link, based on at least the first future link load, the second future link load and the bandwidth usage function for the further data transmission.

According to a sixteenth aspect of the present invention a device for controlling bandwidth sharing for a number of data transmissions in a network is disclosed, comprising a device for determining a future link load according to any of the embodiments of the ninth aspect, the device being adapted for using the future link load for controlling the rate assignment of data transmissions on a shared medium.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

Brief description of the drawings

The accompanying drawings are used to illustrate embodiments of the present invention.

Figures 1(a) to 1(d) and figures 1(a') to 1(c'), and figures 2, 2(a') to 2(c') illustrate embodiments according to the present invention wherein the future link load is estimated based on three bandwidth usage functions for three corresponding data transmissions, each of the data transmissions being associated with different respective clients, requesting respective data to be transported within respective time constraints.

Figure 3 illustrates and example embodiment of a device adapted for performing or participating in methods according to the present invention.

In figure 4 devices adapted for being involved in or performing methods according to the present invention are illustrated.

Description of illustrative embodiments

The description of aspects of the present invention is performed by means of particular embodiments and with reference to certain drawings but the invention is not limited thereto. Depicted figures are only schematic and should not be considered as limiting.

It is an aspect of the present invention that, when data traffic is delivered in a greedy fashion, i.e. consist of elastic data streams, the bursts in the required bandwidth over a certain link will be smoothened and more users can be served, by taking into account the deadlines (time constraints) of the requested content. Doing so, the available link capacity can be used more efficiently. In aspects of the present invention an estimate of a future link load is determined, which facilitates the network management.

This information can be valuable for different aspects of network management, as for instance in:

- congestion/load estimation;
- bandwidth reservation and assignment;
- "green" power assignment;
- policy enforcement;
- congestion and admission control;
- billing and accounting;
- routing; and

- bandwidth allocation in the context of shared media.

Typically, when a client requests data from a data server over a data communication network, he sends one or more signalling messages, called request messages, towards the server, identifying the requested data. In novel transport protocols such as SCAP (Shared Content Addressing Protocol, as for instance described in EP 2 173 077), time constraint information as for instance deadline information is comprised in the request messages. When using HTTP, the HTTP request can comprise data range and deadline headers.

Other signalling mechanisms which provide time constraints information, as for instance deadline information, within request messages from a client to a server over a data communication network may also benefit from aspects of the present invention.

Assume a link in a data communication network, transporting data flows using a protocol which comprises time constraint (for instance deadline) information in request messages from a client to a server sent over the network. Requests for content are sent by the client by specifying a range (start and end address) and associated time constraint information, for instance associated deadline information (deadline for delivery of a first byte and deadline for delivery of a last byte, further for instance with a linear interpolation for all intermediate bytes). These requests are systematically updated (for instance every 100 ms) to provide the latest delivered content status of each request. If requests are pending, the respective link will be fully occupied, if all requests are handled, the link will be idle.

According to embodiments of the present invention it is proposed to combine data range and deadline information into an estimate that reflects the future bandwidth requirements of the link.

Note that only part of the total available bandwidth of the link may be occupied by deadline aware data traffic, and that another part or the complementary part of the total available bandwidth on the link may be occupied by other types of data transmissions such as non-elastic/real-time and bound /unbound elastic flows.

According to preferred embodiments of the present invention, referred to as constant bandwidth measurement (CBM), a virtual constant bandwidth scheduling is assumed for each of the data transmissions. The required (constant) bandwidth, for delivering the last byte of the requested data within the time constraint, e.g. just in time, can be calculated from the moment of calculation until the deadline of the last byte. The sum of the constant values corresponding with all the requests, and thus all data transmissions, is the CBM. The CBM will indicate the required bandwidth for serving all the requests, such that the deadline is met for the respective last bytes, just in time.
This can be formulated as follows:

$$\text{CBM} = \Sigma_i(\text{cbm}_i) = \Sigma_i(\text{cs}_i \ / \ \text{de}_i) = \Sigma_i(B_i \ . \ (\text{de}_i - \text{db}_i) \ / \ \text{de}_i)$$

With $\text{cs}_i$ is the remaining content size of request i (or data transmission i); $B_i$ is the requested bandwidth of request i (or data transmission i); $\text{db}_i$ and $\text{de}_i$ the deadline of the first and last byte of request i (or data transmission i), where the deadline for a byte can be expressed as a time-difference between the time of calculation and the time by which the byte must arrive at the latest at the client.

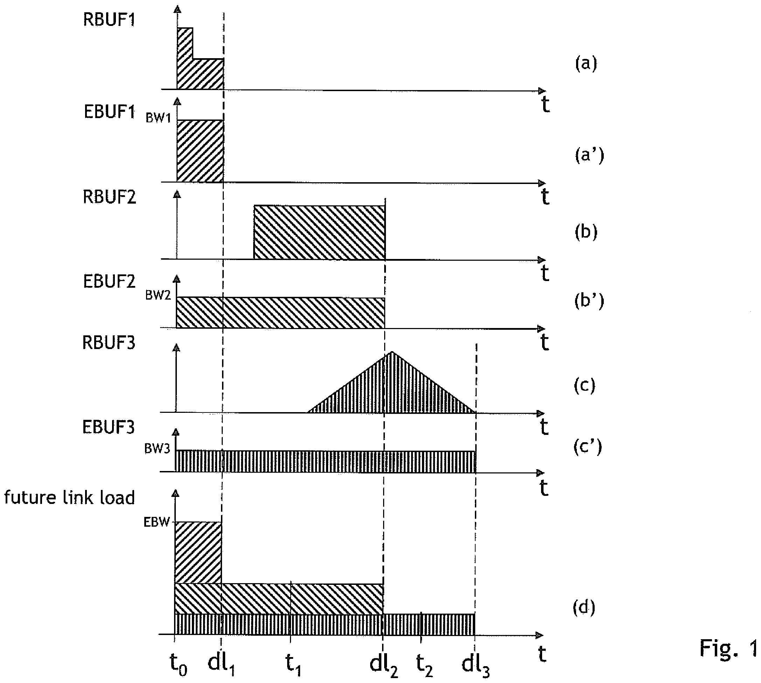

Figures 1(a)-1(c), 1(a') to 1(c') and figure 1(d) illustrate embodiments according to the present invention wherein the future link load is estimated based on three requested bandwidth usage functions (RBUF1, RBUF2, RBUF3, illustrated in figure 1(a), 1(b) and 1(c) respectively) for three corresponding data transmissions, each of the data transmissions being associated with different respective clients, requesting respective data to be transported within respective time constraints. The three requested bandwidth usage functions are mapped on estimated bandwidth usage functions (see figure 1(a') to 1(c'); EBUF1, EBUF2, EBUF3) which are constant over time, with respective bandwidths of BW1, BW2 and BW3. The estimated future link load is depicted in figure 1(d). At time $t_0$, the CBM = BW1 + BW2 + BW3, at $t_1$, the CBM = BW1 + BW2, and at $t_2$, the CBM = BW1.

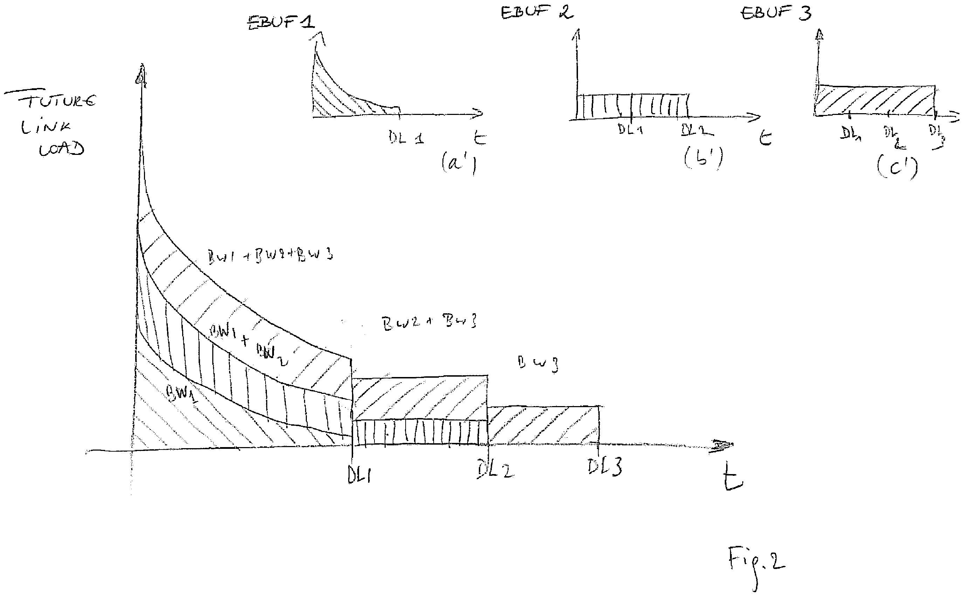

In figure 2 and figure 2(a') to 2(c') a similar embodiment is depicted, wherein the first estimated bandwidth usage function (figure 2(a')) is not constant over time, while the second and third bandwidth usage functions (figure 2(b') and 2(c')) are constant over time. Figure 2 illustrates the estimated future link load.

It can be noted that the bandwidth which is eventually delivered (delivered bandwidth usage function (DBUF)) for each of the data transmissions is typically different from the estimated bandwidth usage function, as well as from the requested bandwidth usage function.

This type of embodiments may though have the disadvantage that clients may abuse the system by requesting data in separate subsequent requests (and thus different data transmissions), thereby making the requested data delivery quicker when compared to clients which make only a single request (and thus a single data transmission). This possibility for abuse has at least partially been solved in the following preferred embodiments.

According to these preferred embodiments a more complex estimate is proposed which can be used for a "fair bandwidth allocation". For the purpose of this description, it will be called atomic constant bandwidth measurement (ACBM). Hereby each request (data transmission) is split into "atomic request" or sub requests and each of these sub requests is delivered again with a constant bandwidth until the last byte deadline of the respective requests. According to these embodiments the delivery speed of requested data can be made substantially independent of the number of sub requests used.

The estimate or measure can be formulated as follows:

$$
\text{ACBM} = \Sigma_i \ (\text{acbm}_i) = \Sigma_i \ (\text{cs}_i \ . \ (\ln(\text{de}_i) - \ln(\text{db}_i)) \ / \ (\text{de}_i - \text{db}_i)) = \Sigma_i \ (\text{B}_i \ . \ \ln(\text{de}_i \ / \ \text{db}_i))
$$

With "ln()" being the natural logarithm (or based on any other log base), and the further terminology as defined before.

If requests are not cancelled when their deadline is expired, for instance when the requested data has not yet completely been delivered to the client, the following embodiments are disclosed for dealing with possibly negative deadline values:

- Add a maximum multiplication factor M of the requested bandwidth as maximum bandwidth:

$$
\text{cbm}_i = \text{M} \ . \ \text{cs}_i \ / \ (\text{de}_i - \text{db}_i) = \text{M} \ . \ \text{B}_i \ \text{if} \ \text{de}_i - (\text{de}_i - \text{db}_i) \ / \ \text{M} < 0
$$

$$
\text{cbm}_i = \text{cs}_i \ / \ \text{de}_i = \text{B}_i \ . \ (\text{de}_i - \text{db}_i) \ / \ \text{de}_i \ \text{otherwise}
$$

- Or simpler if M = 1:

$$
\text{cbm}_i = \text{cs}_i \ / \ (\text{de}_i - \text{db}_i) = \text{B}_i \ \text{if} \ \text{db}_i < 0
$$

$$
\text{cbm}_i = \text{cs}_i \ / \ \text{de}_i = \text{B}_i \ . \ (\text{de}_i - \text{db}_i) \ / \ \text{de}_i \ \text{otherwise}
$$

- Add the size as the maximum bandwidth:

$$
\text{cbm}_i = \text{cs}_i = \text{B}_i \ . \ (\text{de}_i - \text{db}_i) \ \text{if} \ \text{de}_i < 1
$$

$$
\text{cbm}_i = \text{cs}_i \ / \ \text{de}_i = \text{B}_i \ . \ (\text{de}_i - \text{db}_i) \ / \ \text{de}_i \ \text{otherwise}
$$

- Or, for atomic CBM to have a continuous measurement:

$$
\text{acbm}_i = \text{cs}_i = \text{B}_i \ . \ (\text{de}_i - \text{db}_i) \ \text{if} \ \text{de}_i < 1
$$

$$
\text{acbm}_i = \text{B}_i \ . \ (\ln(\text{de}_i) - \text{db}_i + 1) \ \text{if} \ \text{db}_i < 1
$$

$$
\text{acbm}_i = \text{B}_i \ . \ \ln(\text{de}_i \ / \ \text{db}_i) \ \text{otherwise}
$$

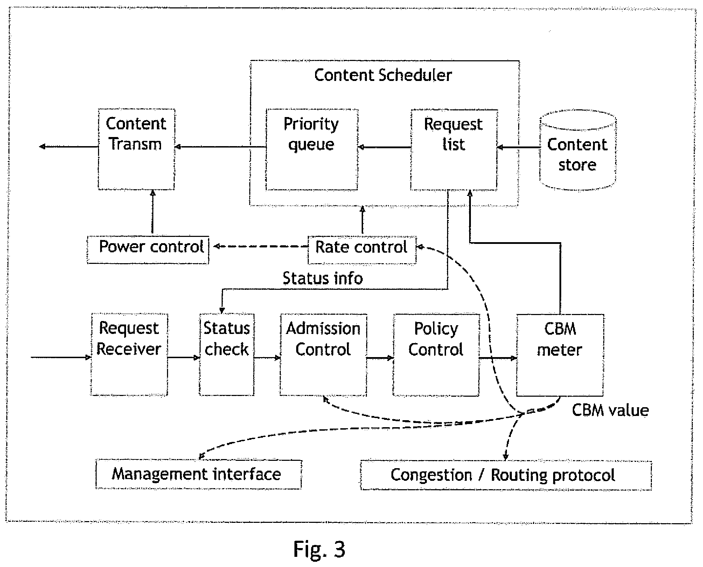

Figure 3 shows the internals of a device capable of handling content delivery for clients that send requests for data transmissions. A request contains the start and end address of the content (e.g. in bytes), and a deadline for the first byte (db) and a deadline for the last byte (de). This expresses a need for the client to receive the bytes that are addressed, with a constraint that the first byte in the address range, needs to be received before the first deadline, and the last byte before the end deadline. Any intermediate byte needs to be sent before a deadline according to a linear interpolation between the start and end address with respective deadlines. Clients typically refresh pending requests within a refresh interval. The server "forgets" requests after a time-out interval, longer than the refresh interval. The client can acknowledge receipt of content for instance by advancing the start address of the refreshed request. If the begin address is the same as the end address, the request can be considered to be completed, and can be deleted in the server.

Request packets can be received by a request receiver means. A soft state of pending requests can be kept in the request list. In a Status check means, an incoming request message is checked if it is a new-/update-/delete-request message, by using information of the request list. For known requests, the previous cbm value, also kept in the request list, can be added to the request message status. In an Admission control means new-request messages are admitted for instance if the current CBM value is lower than a predefined threshold. If a user policy is required, a Policy control means will keep a cbm value per user, and will reject or adapt messages that are not according to the policy. The finally admitted and potentially corrected request messages are sent to a CBM meter. In the CBM meter the new cbm value can be calculated for this request. This new value will typically be different from the previous value, since the deadlines and possibly the content range are typically changed from the previous request. The previous cbm value is subtracted from the total CBM value and the new cbm value is added. If it was a new-request message, then the subtraction step can be left out. If it was a delete-request message, then the addition step can be left out. This way the CBM value can be updated.

The CMB meter means will adapt the cbm status of the request, and send it further to a Request list means. The request list means adds/updates/deletes the request status that it keeps for the pending requests. Based on the request list, a content scheduler can then schedule content from the content store in the priority queue, which is sent for instance in "earliest deadline first" order to the client via a Content Transmitter means.

The CBM meter means will inform several means for an updated CBM value. Besides the admission control means, also the rate control means for the content scheduler, and depending on that the power control for the transmitter. If a lower transmission rate is required, a lower modulation index and transmission power can be used. Also the management interface can be informed, to store the value in a MIB (Management Information Base) or send traps or alarms if the CBM value exceeds a certain threshold. As a last example the CBM value can be fed to a Signalling means for congestion or routing protocols.

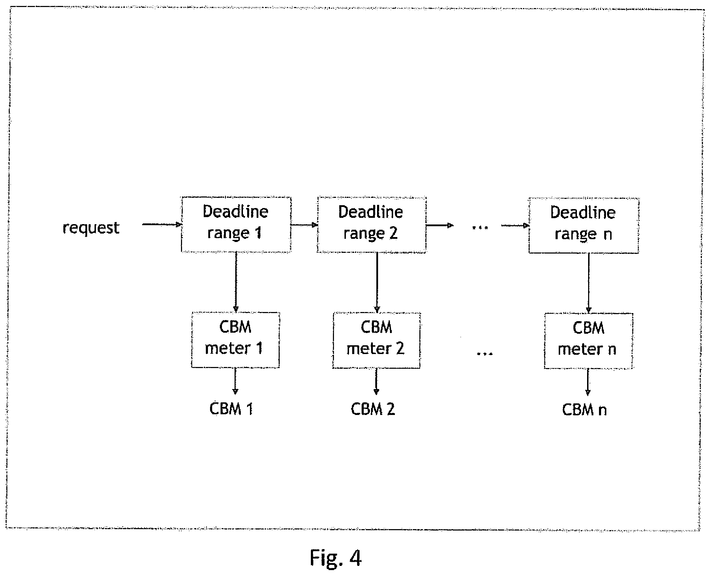

In figure 4, an example is shown for a multi-stage CBM meter. The request goes through a series of filters. Each filter checks the request deadlines for the part that lies in the according filter range. This way, the respective CBM values give a view on content bandwidth requirements for that specific range of deadlines. This can be useful to estimate the risk in delivering below the global CBM. For instance if a two-stage CBM meter calculates a first CBM value for content with deadlines below 10 seconds, and a second value for content with deadlines above 10 seconds, then the bandwidth assignment can temporarily (maximum about 10 seconds) be reduced to the first CBM value.

It will be appreciated by the skilled person that alternative estimates can be made of the future acquired bandwidth for a predetermined type of data transmission (for instance relating to elastic data transmission).

The estimate of the future link load or future bandwidth requirements for a predetermined type of data transmissions as for instance the CBM or ACBM estimates, can be used in different network management applications.

The estimate gives a direct result for congestion/load estimation. The estimate gives a relatively stable value, even for reasonably small amounts of requests, and will be burstier if more requests with short deadlines are handled.

The estimate can also be used for bandwidth reservation and assignment purposes. The estimate can be used to steer the outgoing rate of a server or intermediate cache/switch/router in the network. This will allow a smoother (less bursty) delivery of the aggregate of deadline aware content (e.g. SCAP), next to delivery of content based on fair share protocols (TCP, CCN, DCCP), while preserving guarantees for meeting the deadlines.

Following extensions can be defined on the original (A)CBM($B_i$, $db_i$, $de_i$) :

$$E(A)CBM = B_f + F_f \cdot (A)CBM(B_i, db_i - d_t, de_i - d_t)$$

A fixed delivery rate ($B_f$) can be added or a predetermined multiplication factor ($F_f$) can be added to the original formulas. This may assign more bandwidth and may ensure better guarantees for delivering the content on time, but may result in burstier traffic.

The assigned bandwidth can also be calculated relatively to a target deadline ($d_t$), the target deadline lying before the actual deadline of the request, by subtraction the target deadline from the requested deadline. This way the system will strive to meet that target deadline, thus assigning more bandwidth and ensuring better guarantees for delivering the content on time, but again possibly increasing the burstiness.

The fixed bandwidth factor $F_f$ can be adapted to the result of the original (A)CBM value. Eg, if lower than a first threshold, the (A)CBM can be increased, to allow better service. When above a second threshold, the (A)CBM can be decreased to limit the assigned bandwidth. It is assumed in this latter case, that the deadlines may be exceeded, or congestion or admission control may be used to reduce the load.

The estimate can also be used for "green power assignment". Typically the power consumption is not linear with the bit rate. Usually there is more power required per bit for a higher bitrate then for a lower bit-rate. Being able to predict an average bitrate over a longer time, is better than switching between "no content to serve" and "serving at full power". Fluctuations due to increasing and decreasing power are to be avoided. Due to the use of the predictive information (i.e. the estimated future link load), methods according to aspects of the present invention will be more stable and robust than state of the art methods. So if above bandwidth assignment is applied to calculate the required minimum power to support the assigned bandwidth, the system can have optimised power consumption.

The estimate can also be used in policy enforcement (PE), and congestion and admission control (AC). The estimate can be used to do estimate-based admission control. It will be valuable in a system/domain using PCN (Pre-Congestion Notification) to control admission. Policy enforcing can proactively adapt or reject requests, instead of dropping packets after measuring the actual content delivery rate or controlling the delivery rate with traffic shaping techniques. By setting a maximum threshold for the (A)CBM value, the admission can be controlled for new flows. Per user/application a maximum request policy can be defined, such that the requests cannot exceed a maximum (A)CBM. Deadlines can be adapted by a policy enforcement function, to ensure compliance with the policy, and to reduce the impact of misuse to a certain user/application only.

The estimate can also be used in billing activities. The estimate can have an important function in motivating applications to select the correct deadlines (next to PE/AC and the correct priority handling of applications of the same user). Instead of billing the actual delivery rate or bytes, the CBM or ACBM value could be billed. If content is delivered more upfront, the (A)CBM will quickly lower and become 0 before the deadline is expired.

An other example implementation is to calculate a cost factor $F_c$ that is used by multiplying it with the actual delivery rate (count bytes in a time interval).

The cost factor could be calculated as follows:

$$F_c = CBM / \Sigma_i (B_i) = \Sigma_i (cs_i / de_i) / \Sigma_i (cs_i / (de_i - db_i))$$

$$AF_c = ACBM / \Sigma_i (B_i) = \Sigma_i (cs_i . (ln(de_i) - ln(db_i)) / (de_i - db_i)) / \Sigma_i (cs_i / (de_i - db_i))$$

The billable content size could be:

$$Sb = Sd . F_c$$

with Sb the billable content size, Sd the delivered content size, and $F_c$ the cost factor when the size was measured. If cost is handled per delivered packet, based on CBM, the following formula could be used:

$$Sb = Sp . (de - db) / de$$

with Sb the billable content size, Sp the packet size, and de and db the deadlines of the pending request for that packet. Similar, for packet billing based on ACBM, the following formula could be used:

$$Sb = Sp . ln(de / db)$$

If only the deadline for the packet is known (dp), then the following formula could be used:

$$Sb = Sp / dp$$

The estimate can also be used for routing purposes. The (A)CBM can be used to estimate the future bandwidth requirements and/or cost of a routing path, and select appropriate alternative paths that are less loaded/costly. The (A)CBM (possibly divided by the link capacity) could replace the congestion metrics that are used in state of the art routing protocols.

The estimate can also be used for bandwidth share assignment. The estimate can be used for controlling the rate assignment of groups of requests (e.g. per destination) on a shared medium. This can be similar to the use in bandwidth reservation and assignment as described before, but regulates the share of the total resource that is assigned to a specific group of data transmissions, the group for instance being defined as those data transmissions associated to the same client. For example the time-slice assignment for a group of requests in a time-division multiplexing system or the channel assignment in a wavelength-division multiplexing system can be the result of a (A)CBM calculation of the requests in that group.

It will be appreciated by the skilled person that aspects according to the present invention allow calculating the congestion in a network based on data requests for data transmission of a certain type (e.g. elastic data transmission). By using this information, a wide range of network management decisions can be made by allowing a network operator to more efficiently use the network resources. The method and devices according to aspects of the present invention differ from methods and devices of state of the art approaches in that, today, decisions on the future use of network resources are based only on past and current information. It is a substantial advantage of the present invention that more information is used and that the network operator has therefore a better knowledge of the future behaviour of the network how to manage it.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

**Claims**

1. A method for determining a future link load for a predetermined type of data transmissions on a link in a data communication network, comprising:

   - receiving information relating to size and delivery time constraints of data to be transported, for data transmissions of said predetermined type;
   - determining said future link load for said link for said predetermined type of data transmissions, based on at least said information, wherein receiving information comprises extracting said information from signalling messages associated with said data transmissions, said messages being transmitted from associated clients to respective data servers, whereby the data transmission is associated with different respective clients requesting respective data to be transported within the respective time constraints, the method comprising receiving update information and updating previously received information with said update information for at least one data transmission of said data transmissions, during said data transmission wherein the future load at a certain moment in time is determined by:

      a. determining an estimated non-constant bandwidth usage function, indicating the bandwidth usage in function of time, required for delivering said data within the respective delivery time constraints, for each of said data transmissions;
      b. calculating said future link load for said predetermined type of data transmissions on said link, based on values of said respective estimated non-constant bandwidth usage functions for said certain moment in time for each of said data transmissions.

2. The method according to claim 1, wherein said data size and delivery time constraints information is based on a requested non-constant bandwidth usage function.

3. The method according to claim 1, wherein each non-constant bandwidth usage function is such that predetermined data requested within predetermined time constraints is not delivered faster when requested by means of a plurality of parallel data transmissions, when compared to being requested by a single data transmission.

4. The method according to any of the claims 1 to 3, further comprising performing congestion estimation by: reserving a corresponding bandwidth of the total available bandwidth on said link for said predetermined type of data transmissions, wherein that said corresponding bandwidth is based on said future link load of said predetermined type of data transmissions.

5. The method according to any of the claims 1 to 3, further comprising determining data rate for data transmissions on a link in a data communication network by:
setting the data rate of at least one data transmission on said link in order to optimise said link load based on said determined future link load.

6. The method according to any of the claims 1 to 3, further comprising controlling energy consumption in a network by:
setting the data rate of at least one data transmission on said link in order to optimise energy consumption of said network over said link based on said determined future link load.

7. The method according to any of the claims 1 to 3, further comprising performing admission for data transmissions over a network by:
determining whether to allow or disallow a further data transmission to be introduced on said link based on said determined future link load and available bandwidth on said link.

8. The method according to any of the claims 1 to 3, further comprising billing by:
determining a data transmission cost for at least one further data transmission of said predetermined type based on said future link load and on a non-constant bandwidth usage function of said further data transmission, indicating the bandwidth usage in function of time, required for delivering said respective data within the respective delivery time constraints.

9. The method according to any of the claims 1 to 3, further comprising:

b. determining a further future link load for said predetermined type of data transmissions on a further link in a data communication network according to any of the claims 1 to 5;
c. determining an estimated non-constant bandwidth usage function for a further data transmission to be routed over said link or over said further link, indicating the bandwidth usage in function of time, required for delivering data to be transported within the respective delivery time constraints;
d. routing said further data transmission over said link or over said further link, based on at least said future link load, said further future link load and said estimated non-constant bandwidth usage function for said further data transmission.

10. The method according to any of the claims 1 to 3, further comprising sharing bandwidth for a number of data transmissions in a network by:
using said future link load for controlling the rate assignment of data transmissions on a shared medium.

11. A device for determining future link load for a predetermined type of data transmissions on a link in a data communication network, comprising:

- a means for receiving information relating to size and delivery time constraints for data to be transported, for data transmissions of said predetermined type;
- a means for determining the future link load at a certain moment in time for said link for said predetermined type of data transmissions , based on at least said information, wherein the means for receiving information is adapted to extract said information from signalling messages associated with said data transmissions, said messages being transmitted from associated clients to respective data servers, whereby the data transmission is associated with different respective clients requesting respective data to be transported within the respective time constraints, wherein the device is further adapted for receiving update information and for updating previously received information with said update information for at least one data transmission of said data transmissions, during said data transmission wherein the said means for determining the future link load at a certain moment in time is further adapted for:

a. determining an estimated non-constant bandwidth usage function, which indicates the bandwidth usage in function of time, required for delivering said data within the respective delivery time constraints, for each of said data transmissions;
b. calculating said future link load for said predetermined type of data transmission on said link, based on values of said respective estimated non-constant bandwidth usage functions for said certain moment in time for each of said data transmissions.

**Patentansprüche**

1. Verfahren zum Bestimmen einer künftigen Verbindungslast für einen vorbestimmten Typen von Datenübertragungen auf einer Verbindung in einem Datenkommunikationsnetzwerk, umfassend:

   - Empfangen von Information, die sich bezieht auf Größe und Übermittlungszeitbeschränkungen für die zu transportierenden Daten, für Datenübertragungen besagten vorbestimmten Typs;
   - Bestimmen besagter künftigen Verbindungslast für besagten vorbestimmten Typen von Datenübertragungen, auf Grundlage mindestens besagter Information, wobei das Empfangen der Information umfasst das Extrahieren besagter Information aus Signalisierungsnachrichten, welche verbunden sind mit besagten Datenübertragungen, wobei besagte Nachrichten übertragen werden von verbundenen Clients auf entsprechende Datenserver, wobei die Datenübertragung verbunden ist mit verschiedenen entsprechenden Clients, die entsprechende Daten anfordern, welche transportiert werden müssen innerhalb der entsprechenden Zeitbeschränkungen, wobei das Verfahren umfasst das Empfangen aktualisierter Information und das Aktualisieren vorher empfangener Information mit besagter Aktualisierungsinformation für mindestens eine Datenübertragung besagter Datenübertragungen, während besagter Datenübertragung, wobei die künftige Last zu einem bestimmten Zeitpunkt bestimmt wird durch:

   a. Bestimmen einer abgeschätzten nicht konstanten Bandbreitenverwendungsfunktion, welche die Bandbreitenverwendung anzeigt als Funktion der Zeit, gefordert zum Übermitteln besagter Daten innerhalb der entsprechenden Übermittlungszeitbeschränkungen, für jede besagter Datenübertragungen;
   b. Berechnen besagter künftigen Verbindungslast für besagten vorbestimmten Typen von Datenübertragung auf besagter Verbindung, auf Grundlage von Werten besagter entsprechenden abgeschätzten nicht konstanten Bandbreitenverwendungsfunktionen für besagten Zeitpunkt für jede besagter Datenübertragungen.

2. Verfahren nach Anspruch 1, wobei besagte Datengrößen- und Übermittlungszeitbeschränkungsinformation basiert auf einer angeforderten nicht konstanten Bandbreitenverwendungsfunktion.

3. Verfahren nach Anspruch 1, wobei jede nicht konstante Bandbreitenverwendungsfunktion so ist, dass vorbestimmte Daten, die innerhalb vorbestimmter Zeitbeschränkungen angefordert werden, nicht schneller übermittelt werden, wenn sie angefordert werden mittels einer Vielzahl paralleler Datenübertragungen, wenn sie verglichen werden mit solchen, die von einer einzelnen Datenübertragung angefordert werden.

4. Verfahren nach einem beliebigen der Ansprüche 1 bis 3, weiterhin umfassend das Durchführen einer Stauabschätzung durch:
   Reservieren einer entsprechenden Bandbreite der gesamten verfügbaren Bandbreite auf besagter Verbindung für besagten vorbestimmten Typen von Datenübertragungen, wobei besagte entsprechenden Bandbreiten basieren auf besagter künftigen Verbindungslast besagten vorbestimmten Typs von Datenübertragungen.

5. Verfahren nach einem beliebigen der Ansprüche 1 bis 3, weiterhin umfassend das Bestimmen von Datenraten für Datenübertragungen auf einer Verbindung in einem Datenkommunikationsnetzwerk durch:
   Einstellen der Datenrate mindestens einer Datenübertragung auf besagter Verbindung, um besagte Verbindungslast zu optimieren auf Grundlage besagter bestimmten künftigen Verbindungslast.

6. Verfahren nach einem beliebigen der Ansprüche 1 bis 3, weiterhin umfassend das Steuern des Energieverbrauchs in einem Netzwerk durch:
   Einstellen der Datenrate mindestens einer Datenübertragung auf besagter Verbindung, um den Energieverbrauch besagten Netzwerks über besagte Verbindung zu optimieren auf Grundlage besagter bestimmten künftigen Verbindungslast.

7. Verfahren nach einem beliebigen der Ansprüche 1 bis 3, weiterhin umfassend das Durchführen der Zulassung für Datenübertragungen über ein Netzwerk durch:
   Bestimmen, ob einer künftigen Datenübertragung erlaubt wird oder nicht, in besagte Verbindung eingeführt zu werden, auf Grundlage besagter bestimmten künftigen Verbindungslast und besagter verfügbaren Bandbreite auf besagter Verbindung.

8. Verfahren nach einem beliebigen der Ansprüche 1 bis 3, weiterhin umfassend die Vergebührung durch:

Bestimmen von Datenübertragungskosten für mindestens eine weitere Datenübertragung von besagtem vorbestimmtem Typ auf Grundlage besagter künftigen Verbindungslast und einer nicht konstanten Bandbreitenverwendungsfunktion besagter weiteren Datenübertragung, unter Anzeigen der Bandbreitenverwendung als Funktion der Zeit, die benötigt wird für die Übermittlung besagter entsprechenden Daten innerhalb der entsprechenden Übermittlungszeitbeschränkungen.

9. Verfahren nach einem beliebigen der Ansprüche 1 bis 3, weiterhin umfassend:

b. Bestimmen einer weiteren künftigen Verbindungslast für besagten vorbestimmten Typen von Datenübertragungen auf einer weiteren Verbindung in einem Datenkommunikationsnetzwerk nach einem beliebigen der Ansprüche 1 bis 5;

c. Bestimmen einer Abschätzung der nicht konstanten Bandbreitenverwendungsfunktion für eine weitere Datenübertragung, die geleitet wird über besagte Verbindung oder über besagte weitere Verbindung, unter Anzeigen der Bandbreitenverwendung als Funktion der Zeit, die erforderlich ist für das Übermitteln von Daten, die transportiert werden müssen innerhalb der entsprechenden Übermittlungszeitbeschränkungen;

d. Weiterleitung besagter weiteren Datenübertragung über besagte Verbindung oder über besagte weitere Verbindung, auf Grundlage mindestens besagter künftigen Verbindungslast, besagter weiteren künftigen Verbindungslast und besagter weiteren Datenübertragung.

10. Verfahren nach einem beliebigen der Ansprüche 1 bis 3, weiterhin umfassend das Teilen von Bandbreite für eine Anzahl von Datenübertragungen in einem Netzwerk durch:

Verwenden besagter künftigen Verbindungslast zum Steuern der Ratenzuweisung von Datenübertragungen in einem geteilten Medium.

11. Vorrichtung zum Bestimmen einer weiteren künftigen Verbindungslast für einen vorbestimmten Typen von Datenübertragungen auf einer Verbindung in einem Datenkommunikationsnetzwerk, umfassend:

- ein Mittel für das Empfangen von Information, die sich bezieht auf Größe und Übermittlungszeitbeschränkungen für die zu transportierenden Daten, für Datenübertragungen besagten vorbestimmten Typs;

- ein Mittel zum Bestimmen der künftigen Verbindungslast an einem bestimmten Zeitpunkt für besagte Verbindung für besagten vorbestimmten Typen von Datenübertragungen, auf Grundlage mindestens besagter Information, wobei das Mittel zum Empfangen von Information ausgelegt ist zum Extrahieren besagter Information aus Signalisierungsnachrichten, die verbunden sind mit besagten Datenübertragungen, wobei besagte Nachrichten übertragen werden von verbundenen Clients zu entsprechenden Datenservern, wobei die Datenübertragung verbunden ist mit verschiedenen entsprechenden Clients, die entsprechende Daten anfordern, welche transportiert werden müssen innerhalb der entsprechenden Zeitbeschränkungen, wobei die Vorrichtung weiterhin ausgelegt ist zum Empfang von Aktualisierungsinformation und zum Aktualisieren vorher empfangener Information mit besagter Aktualisierungsinformation für mindestens eine Datenübertragung besagter Datenübertragungen, während besagter Datenübertragung, wobei das besagte Mittel zum Bestimmen weiterhin ausgelegt ist zum:

a. Bestimmen einer abgeschätzten nicht konstanten Bandbreitenverwendungsfunktion, welche die Bandbreitenverwendung anzeigt als Funktion der Zeit, gefordert zum Übermitteln besagter Daten innerhalb der entsprechenden Übermittlungszeitbeschränkungen, für jede besagter Datenübertragungen;

b. Berechnen besagter künftigen Verbindungslast für besagten vorbestimmten Typen von Datenübertragung auf besagter Verbindung, auf Grundlage von Werten besagter entsprechenden abgeschätzten nicht konstanten Bandbreitenverwendungsfunktionen für besagten Zeitpunkt für jede besagter Datenübertragungen.

**Revendications**

1. Procédé de détermination d'une future charge de liaison pour un type prédéterminé de transmissions de données sur une liaison dans un réseau de communication de données, comprenant les étapes suivantes :

- recevoir des informations relatives à la taille et aux contraintes de temps de distribution de données à transporter, pour des transmissions de données dudit type prédéterminé ;

- déterminer ladite future charge de liaison de ladite liaison pour ledit type prédéterminé de transmissions de données, en fonction au moins desdites informations, la réception d'informations comprenant l'extraction desdites informations à partir des messages de signalisation associés auxdites transmissions de données, lesdits messages étant transmis depuis des clients associés vers des serveurs de données respectifs, la transmission de données étant ainsi associée à des clients respectifs différents demandant à ce que des données respectives soient transportées dans les contraintes de temps respectives, le procédé comprenant la réception d'informations de mise à jour et la mise à jour d'informations reçues précédemment au moyen desdites informations de mise à jour pour au moins une transmission de données desdites transmissions de données, durant ladite transmission de données où à un certain moment la future charge est déterminée par les étapes suivantes :

    a. déterminer une fonction de l'utilisation de la bande passante non constante estimée, indiquant l'utilisation de la bande passante en fonction du temps, nécessaire à la distribution desdites données dans les contraintes de temps de distribution respectives, pour chacune desdites transmissions de données ;
    b. calculer ladite future charge de liaison pour ledit type prédéterminé de transmissions de données sur ladite liaison, sur la base de valeurs desdites fonctions de l'utilisation de la bande passante non constantes estimées respectives pour ledit certain moment pour chacune desdites transmissions de données.

**2.** Procédé selon la revendication 1, dans lequel lesdites informations de taille de données et de contraintes de temps de distribution sont basées sur une fonction de l'utilisation de la bande passante non constante demandée.

**3.** Procédé selon la revendication 1, dans lequel chaque fonction de l'utilisation de la bande passante non constante est telle que des données prédéterminées demandées dans des contraintes de temps prédéterminées ne sont pas distribuées plus rapidement lorsqu'elles sont demandées au moyen d'une pluralité de transmissions de données parallèles qu'elles ne le sont lorsqu'elles sont demandées par une transmission de données unique.

**4.** Procédé selon l'une quelconque des revendications 1 à 3, comprenant en outre l'exécution d'une estimation d'encombrement en :
réservant une bande passante correspondante de la bande passante totale disponible sur ladite liaison pour ledit type prédéterminé de transmissions de données, ladite bande passante correspondante étant basée sur ladite future charge de liaison dudit type prédéterminé de transmissions de données.

**5.** Procédé selon l'une quelconque des revendications 1 à 3, comprenant en outre la détermination d'un débit de données pour des transmissions de données sur une liaison dans un réseau de communication de données en :
réglant le débit de données d'au moins une transmission de données sur ladite liaison afin d'optimiser ladite charge de liaison en fonction de ladite future charge de liaison déterminée.

**6.** Procédé selon l'une quelconque des revendications 1 à 3, comprenant en outre le contrôle de la consommation d'énergie dans un réseau en :
réglant le débit de données d'au moins une transmission de données sur ladite liaison afin d'optimiser la consommation d'énergie dudit réseau sur ladite liaison en fonction de ladite future charge de liaison déterminée.

**7.** Procédé selon l'une quelconque des revendications 1 à 3, comprenant en outre l'exécution de l'admission de transmissions de données sur un réseau en :
déterminant s'il faut attribuer ou non l'introduction d'une transmission de données supplémentaire sur ladite liaison en fonction de ladite future charge de liaison déterminée et de ladite bande passante disponible sur ladite liaison.

**8.** Procédé selon l'une quelconque des revendications 1 à 3, comprenant en outre la facturation en :
déterminant un coût de transmission de données pour au moins une transmission de données supplémentaire dudit type prédéterminé sur la base de ladite future charge de liaison et d'une fonction de l'utilisation de la bande passante non constante de ladite transmission de données supplémentaire, indiquant l'utilisation de la bande passante en fonction du temps, nécessaire à la distribution desdites données respectives dans les contraintes de temps de distribution respectives.

**9.** Procédé selon l'une quelconque des revendications 1 à 3, comprenant en outre les étapes suivantes :

    b. déterminer une future charge de liaison supplémentaire pour ledit type prédéterminé de transmissions de données sur une liaison supplémentaire dans un réseau de communication de données selon l'une quelconque des revendications 1 à 5 ;
    c. déterminer une fonction de l'utilisation de la bande passante non constante estimée pour une transmission de données supplémentaire devant être acheminée sur ladite liaison ou sur ladite liaison supplémentaire, indiquant l'utilisation de la bande passante en fonction du temps, nécessaire à la distribution de données devant être transportées dans les contraintes de temps de distribution respectives ;

d. acheminer ladite transmission de données supplémentaire sur ladite liaison ou sur ladite liaison supplémentaire, sur la base d'au moins un élément parmi ladite future charge de liaison, ladite future charge de liaison supplémentaire et ladite fonction de l'utilisation de la bande passante non constante estimée pour ladite transmission de données supplémentaire.

**10.** Procédé selon l'une quelconque des revendications 1 à 3, comprenant en outre le partage d'une bande passante pour un certain nombre de transmissions de données dans un réseau en :

utilisant ladite future charge de liaison pour contrôler l'affectation de débit de transmissions de données sur un support partagé.

**11.** Dispositif de détermination d'une future charge de liaison pour un type prédéterminé de transmissions de données sur une liaison dans un réseau de communication de données, comprenant :

- un moyen de réception d'informations relatives à la taille et aux contraintes de temps de distribution de données à transporter, pour des transmissions de données dudit type prédéterminé ;

- un moyen de détermination de la future charge de liaison à un certain moment de ladite liaison pour ledit type prédéterminé de transmissions de données, en fonction au moins desdites informations, le moyen de réception d'informations étant adapté pour extraire lesdites informations à partir de messages de signalisation associés auxdites transmissions de données, lesdits messages étant transmis à partir de clients associés vers des serveurs de données respectifs, la transmission de données étant ainsi associée à différents clients respectifs demandant à ce que des données respectives soient transportées dans les contraintes de temps respectives, le dispositif étant en outre adapté pour recevoir des informations de mise à jour et pour mettre à jour des informations reçues précédemment au moyen desdites informations de mise à jour pour au moins une transmission de données parmi lesdites transmissions de données, durant ladite transmission de données où à un certain moment ledit moyen de détermination de la future charge de liaison est en outre adapté pour :

a. déterminer une fonction de l'utilisation de la bande passante non constante estimée, qui indique l'utilisation de la bande passante en fonction du temps, nécessaire à la distribution desdites données dans les contraintes de temps de distribution respectives, pour chacune desdites transmissions de données ;

b. calculer ladite future charge de liaison pour ledit type prédéterminé de transmission de données sur ladite liaison, sur la base de valeurs desdites fonctions de l'utilisation de la bande passante non constantes estimées respectives pour ledit certain moment pour chacune desdites transmissions de données.

Fig. 1

Fig. 2

EBUF 1

DL 1

(a')

EBUF 2

DL1   DL2

(b')

EBUF 3

DL1   DL2   DL3

(c')

FUTURE LINK LOAD

BW1+BW2+BW3

BW1+BW2

BW1

BW2+BW3

BW3

DL1   DL2   DL3

t

EP 2 388 978 B1

Fig. 3

request → [Deadline range 1] → [Deadline range 2] → ... → [Deadline range n]

Deadline range 1 → [CBM meter 1] → CBM 1

Deadline range 2 → [CBM meter 2] → CBM 2

... 

Deadline range n → [CBM meter n] → CBM n

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050120131 A

- EP 2173077 A